# EUROPÄISCHE PATENTANMELDUNG

(11) **EP 2 289 760 A2**
(43) Veröffentlichungstag der Anmeldung: **02.03.2011**
(21) Anmeldenummer: 10173696.5
(22) Anmeldetag: 23.08.2010
(51) Int. Cl.: B62B 3/14

(54) **Einkaufswagen**

(30) Priorität: 26.08.2009 DE 202009011480 U
(71) Anmelder: J.D. Geck GmbH, 58752 Altena (DE)
(72) Erfinder: Kroker, Thomas, 58513, Lüdenscheid (DE)
(74) Vertreter: Tarvenkorn, Oliver

(57) **Zusammenfassung**

Ein Einkaufswagen umfasst ein Untergestell, mit zwei Paaren von nach vorn und nach hinten abgespreizten Stützen, die endseitig mit Rollen versehen ist, und welches wenigstens zwei Verbindungselemente (25) zur lösbaren Verbindung mit dem Korbboden (23) eines aufgesetzten Drahtkorbes (20) aufweist. Am Fahrgestell sind wenigstens zwei Verbindungselemente mit einer nach oben weisenden Befestigungsfläche angeordnet. An der Unterseite des Korbbodens (23) sind Befestigungselemente (25) angebracht, die eine nach unten weisende Befestigungsfläche (25.1) aufweisen und die an wenigstens einem Ende der Befestigungsfläche (25.1) in einen sich zu einer Korbseitenwand (21) des Drahtkorbes erstreckenden Fortsatz (25.2) übergehen, welche endseitig an die Korbseitenwand (21) angebunden ist. Die Befestigungselemente (25) von Fahrgestell und Drahtkorb sind über Verbindungselemente lösbar verbunden.

## Beschreibung

Die Erfindung betrifft einen Einkaufswagen, wenigstens umfassend ein Untergestell, welches zwei Paare von nach vorn und nach hinten abgespreizten Stützen umfasst, die endseitig mit Rollen versehen ist, und welches wenigstens ein Verbindungselement zur lösbaren Verbindung mit dem Korbboden eines aufgesetzten Drahtkorbes aufweist.

Üblicherweise wird die Verbindung zwischen dem Fahrgestell und dem Drahtkorb im unteren Bereich einer Korb-Seitenwand vorgenommen. In Bezug auf die vorgesehene Fahrtrichtung des Einkaufswagens erfolgt die Befestigung im hinteren Bereich. Dadurch kragt der Drahtkorb weit über die Befestigungsstelle mit dem Fahrgestell hinaus nach vorn über, so dass es möglich ist, die Einkaufswagen mit ihren Drahtkörben ineinander zu schieben, um sie Platz sparend abzustellen.

Bei den herkömmlichen Einkaufswagen wird die Steifigkeit des frei überkragenden Teils des Drahtkorbes dadurch bewirkt, dass die Korb-Seitenwände, die aus mehreren horizontalen und vertikalen, miteinander verschweißten Einzeldrähten bestehen, eine große Profilhöhe und ein entsprechend großes Flächenträgheitsmoment vorweisen. Wird der Drahtkorb zum Beispiel im vorderen, überkragenden Bereich nach unten gedrückt, so werden die Biegekräfte durch die äußersten steifen Korb-Seitenwände aufgenommen und direkt in das Fahrgestell abgeleitet.

Nachteilig bei den bekannten Einkaufswagen ist, dass die Breite der Fahrgestelle stets an die Breite der Drahtkörbe angepasst sein muss. Es ist daher nicht möglich, Drahtkörbe nachträglich zu tauschen und das Fahrgestell zu behalten.

Aus der EP 1 858 743 B1 ist ein Einkaufswagensortiment bekannt, bei dem die Fahrgestelle Befestigungspunkte aufweisen, die für alle darauf aufsetzbaren Größen von Drahtkörben an der gleichen Stelle positioniert sind. Die Verbindung des Fahrgestells mit dem Boden des Drahtkorbs erfolgt über Lager- und Rastelemente aus Kunststoff, welches zudem den Vorteil einer akustischen und elektrostatischen Entkoppelung des oberen Drahtkorbs von dem darunter befindlichen Fahrgestell haben.

Nachteilig ist dabei, dass der in etwa horizontal auf dem Fahrgestell ausgerichtete Korbboden im Falle einer Belastung des nach vorne auskragenden Endes des Drahtkorbes stark auf Biegung beansprucht wird. Dieser besitzt nur ein geringes Flächenträgheitsmoment, selbst wenn Verstärkungsbügel aus Rundstählen eingearbeitet sind.

Ein etwaig vorhandenes Spiel an den hinteren Befestigungselementen führt außerdem dazu, dass der Einkaufskorb mit seinem vorderen Ende nach unten absacken kann. Wenn die hintere Verbindung zwischen Drahtkorb und Fahrgestell nur wenige Millimeter Spiel besitzt, dann führt dies aufgrund der großen Länge des Drahtkorbs, dass dessen Vorderseite deutlich sichtbar nach unten hängt.

Bei einer Belastung, die vorne auf den überkragenden Teil des Drahtkorbes wirkt, wird dieser also zunächst in Folge des vorhandenen Spiels nach vorn gekippt und dann noch zusätzlich aufgrund der geringen Flächenträgheitsmomente im Korbboden stark verbogen. Es ergibt sich der Eindruck, dass der Einkaufswagen instabil und von minderer Qualität sei. Dabei besteht die Gefahr, dass diese subjektive negative Empfindung vom Benutzer auf die Einkaufstätte, in der der Einkaufswagen den Kunden angeboten wird, übertragen wird. Durch die Schwerpunktverschiebung kann bei extremen Belastungen auch eine objektive Kippgefahr bestehen. Zusätzlich können plastische Verformungen des Drahtkorbes erfolgen, so dass das Ineinanderschieben der in Reihe stehenden Einkaufswagen, das sogenannten Stapeln, nicht mehr möglich ist und die Einkaufswagen häufig nachgerichtet werden müssen.

Aufgabe der Erfindung ist es daher, bei einem Einkaufswagen mit einem Universal-Fahrgestell mit festen Befestigungspunkten für die Verbindung mit dem Korbboden verschieden großer Drahtkorbes die Biegesteifigkeit deutlich zu erhöhen und den Einkaufswagen somit insgesamt stabiler zu machen.

Diese Aufgabe wird gemäß der vorliegenden Erfindung durch einen Einkaufswagen mit den Merkmalen des Anspruchs 1 gelöst.

Das Fahrgestell kann ein einzelnes plattenförmiges Verbindungselement aufweisen. Vorzugsweise weist es jedoch wenigstens zwei länglich schienenförmige Verbindungselemente auf, die insbesondere parallel zueinander ausgerichtet sind und die mit einer Verbindungsfläche nach oben weisend am Fahrgestell angeordnet sind. Die einzelnen, zueinander beabstandeten Verbindungselemente haben den Vorteil, dass keine größere Fläche gebildet wird, auf der sich Feuchtigkeit und Schmutz sammeln könnte.

An der Unterseite des Korbbodens des Drahtkorbes ist ein dazu kompatibles Befestigungselement angebracht, das eine abgeflachte Unterseite aufweisen. Auch hierbei ist die Aufteilung in zwei längliche und zueinander beabstandete Befestigungselemente bevorzugt.

Die Befestigungselemente an der Unterseite des Drahtkorbes werden dann auf die sich in Fahrtrichtung erstreckenden, schienenartigen Verbindungsflächen am Fahrgestell aufgesetzt und mit diesen über Clipsverbindungen, Nieten, Schrauben oder andere Befestigungsmittel verbunden oder auch verklebt.

Durch die erfindungsgemäß vorgesehenen Verbindungselemente ergibt sich eine längere Führung des Korbbodens nach außen, also in Fahrtrichtung vorn. Dabei ragen die insbesondere als längliche Befestigungsschienen gestalten Befestigungsplatten wenigstens teilweise nach vorn bis über die schräg abfallen Stützen des Fahrgestells. Erfindungswesentlich ist, dass die Befestigungselemente am Drahtkorb nicht nur einen Flächenbereich aufweisen, der mit der Kontur und ggf. der Profilierung der Verbindungselemente am Fahrgestell übereinstimmt, sondern auch noch jeweils einen seitlichen Fortsatz besitzen, durch welchen sich die Befestigungselemente von den weiter innen am Drahtkorb positionierten Befestigungsstellen bis an die Seitenkante des Drahtkorbes erstrecken. Schließlich besitzen die Fortsätze des Befestigungselements endseitig wenigstens einen in etwa vertikal nach oben weisenden Abschnitt, über welchen die Befestigungselemente direkt an die Korb-Seitenwände angebunden sind.

Durch die erfindungsgemäße Ausbildung der Befestigungselemente am Drahtkorb wird erreicht, dass starke Biegekräfte eben nicht nur punktuell auf den Boden des Drahtkorbes wirken, sondern dass einen größere Abstützweite in Längs- und Breitenrichtung gegeben ist und dass Kräfte auch in die Korb-Seitenwände eingeleitet werden, welche - wie beschrieben - aufgrund ihrer vertikalen Gitterstruktur eine hohe Steifigkeit in vertikaler Belastungsrichtung aufweisen.

Vorzugsweise sind die Befestigungselemente an allen Stellen, an denen ein Kontakt mit dem Korbboden oder den Korb-Seitenwänden besteht, mit diesen verschweißt.

In einer seitlichen Schnittansicht betrachtet kommt dem insbesondere aus einem Blechzuschnitt als Befestigungsplatte ausgebildeten Befestigungselement die Funktion eines Druckgurtes zu, während ein darüber liegender Draht des Korbbodens oder ein sonstiger Verstärkungsdraht die Funktion des Zuggurtes übernimmt. Auf diese Weise ergibt sich bereits eine erhöhte Biegesteifigkeit des unterstützen Bereichs des Bodens.

Diese kann noch dadurch erhöht werden, dass in dem Fortsatz, welcher außerhalb der Kontur des Verbindungselementes des Fahrgestells liegt, eine senkrechte Versteifungsrippe angebracht ist.

Für einen Drahtkorb mit geringerer oder mit größerer Breite gegenüber einem Standardmodell braucht lediglich der nach außen weisende Fortsatz des Befestigungselements gekürzt bzw. verlängert ausgebildet zu werden, so dass er sich stets bis genau an die Korb-Seitenwand erstreckt. Die eigentlichen Befestigungsflächen zur Verbindung mit dem Fahrgestell sind dann trotzdem an einheitlicher Stelle positioniert, so dass ein einfacher Austausch eines vorhandenen Drahtkorbes unter Weiterverwendung des vorhandenen Fahrgestells möglich ist.

Es ist auch möglich, Kunststoff-Elemente zwischen Befestigungsschiene am Fahrgestell und Befestigungselement am Korbboden einzufügen, um so eine Geräuschdämpfung und gegebenenfalls auch eine elektrostatische Entkoppelung zu erreichen. Die größere Breite und Länge der Länge führt zu einer geringeren Flächenpressung an der Verbindungsstelle gegenüber der in EP 1 858 743 B1 beschriebenen punktuellen Lagerung.

Besonders vorteilhaft ist es, wenn das eingefügte Kunststoff-Element mit Anschlagflächen versehen ist, die vertikal, also im rechten Winkel zur Befestigungsflächenebene, angestellt sind. Diese ragen somit vom Korbboden aus nach oben bzw. unten. Beim Ineinanderschieben von Einkaufswagen stoßen diese dann an den Anschlagflächen gegeneinander, d. h. ein hinterer Einkaufswagen schlägt mit seiner nach vorne ausgerichteten Anschlagfläche gegen die hintere Anschlagfläche in dem gleichartig ausgebildeten Dämpfungselement eines vorne stehenden zweiten Einkaufswagens.

Da bei der bevorzugten Ausführungsform der Erfindung dann nur die Kunststoffanschlagflächen gegeneinander prallen, kann ein System von stapelbaren Einkaufswagen gebildet werden, deren Anschlagflächen in der Parkposition aneinander oder voreinander liegen, so dass eine wesentliche Geräuschdämpfung gegenüber den in herkömmlicher Weise ausgebildeten Einkaufswagen erreicht wird.

Zudem kann das Kunststoff-Element einen Geräusch dämpfenden Anschlag für die meist schwenkbeweglich ausgebildete Heckklappe des Drahtkorbs dienen: wird ein Einkaufswagen aus einer Reihe ineinander geschobener Einkaufswagen entnommen, so schlägt die Heckklappe nicht auf einen metallischen Anschlag am Drahtkorb, sondern an eine Prallfläche am Kunststoff-Element.

Die Erfindung wird nachfolgend mit Bezug auf die Zeichnung näher erläutert. Die Figuren zeigen im Einzelnen:
- Fig. 1: einen Einkaufswagen in perspektivischer Ansicht von oben;
- Fig. 2: einen Drahtkorb in perspektivischer Ansicht von unten;
- Fig. 3: zwei ineinander gestapelte Einkaufswagen in seitlicher Ansicht;
- Fig. 4: Teile des Fahrgestells in perspektivischer An- sicht von oben;
- Fig. 5: Teile des Drahtkorbs in perspektivischer An- sicht von unten;
- Fig. 6: ein Dämpfungselement in perspektivischer An- sicht;
- Fig. 7: eine perspektivische Detailansicht zweier ge- stapelter Einkaufswagen von unten; und
- Fig. 8: eine perspektivische Detailansicht zweier ge- stapelter Einkaufswagen von hinten.

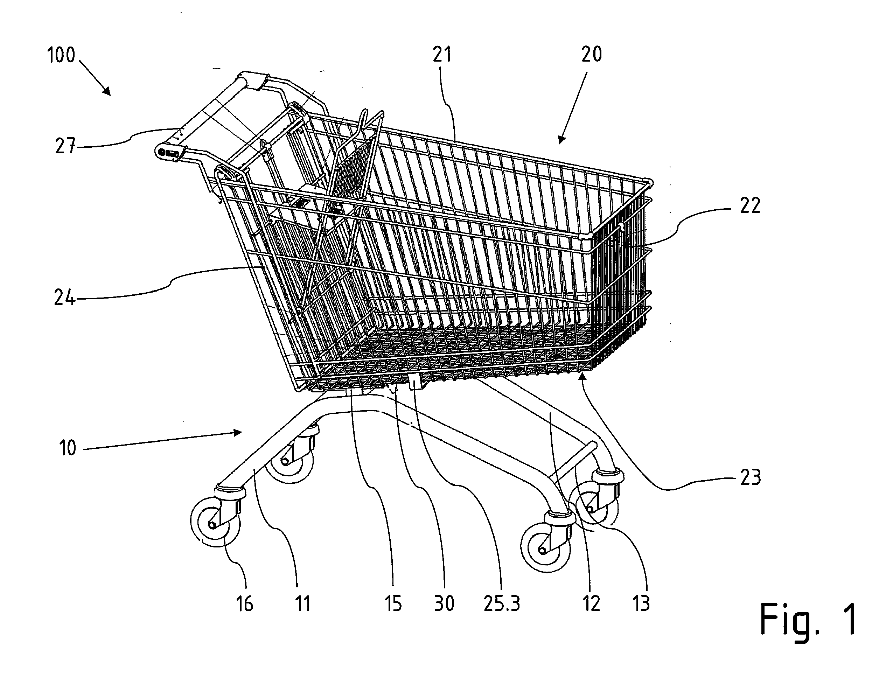

Figur 1 zeigt einen vollständigen Einkaufswagen 100, bestehend aus einem Fahrgestell 10 und einem darauf aufgesetzten Drahtkorb 20.

Der Drahtkorb 20 umfasst in an sich bekannter Weise zwei Korb-Seitenwände 21, eine vordere Wand 22, einen Bügel 27 zum Schieben und eine schwenkbar mit den übrigen Teilen des Drahtkorbs 20 verbundene Heckklappe 24.

Das Fahrgestell 10 umfasst zwei Bügel 11,12, die mit Abstand zueinander und leicht keilförmig zueinander angestellt ausgerichtet sind und die die nach vorne und nach hinten weisenden, schräg angestellten Stützbeine vereinen. Am Ende jedes Stützbeins ist eine gelenkig gelagerte Laufrolle 16 angeordnet. An einem oberen Scheitelpunkt der Bügel 11, 12 des Fahrgestells 10 ist jeweils eine Verbindungselement 15 angeordnet.

Der Drahtkorb 20 liegt mit seinem Befestigungselement 25, von dem in Figur 1 nur ein äußerer Abschnitt 25.3 sichtbar ist, auf der Verbindungselement 15 auf und ist mit dieser verschraubt oder vernietet.

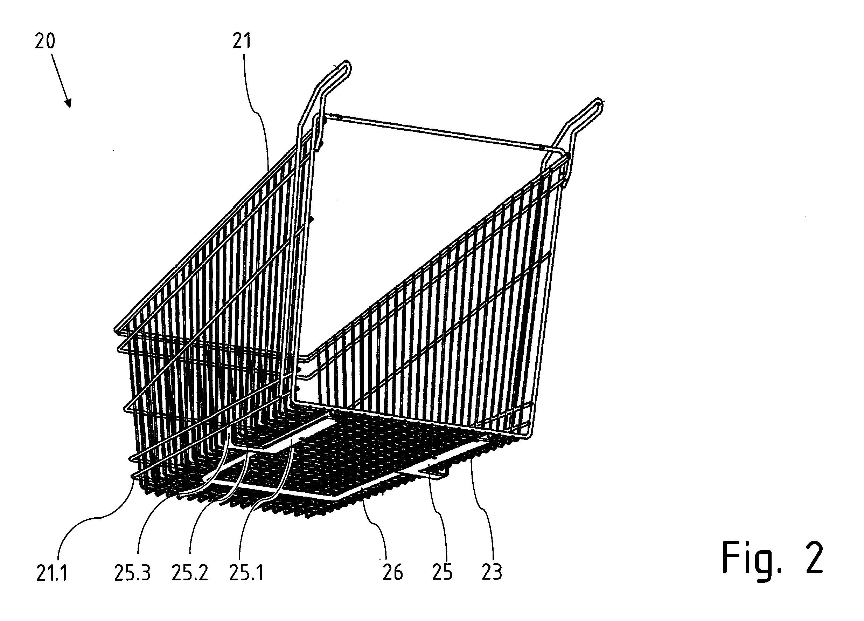

Figur 2 zeigt einen nach der Erfindung ausgebildeten Drahtkorb 20. Sichtbar ist bei dieser perspektivischer Ansicht von hinten / unten / links, dass der Boden 23 des Drahtkorbs 20 durch einen Bügel 26 verstärkt ist, der beispielsweise U-förmig ausgebildet ist und der aus einem Draht gebildet ist, dessen Durchmesser vorzugsweise ein Vielfaches der Stärke der übrigen Drähte des Drahtkorbs 20 beträgt. Beispielsweise beträgt der Durchmesser 10 mm.

Der Verstärkungsbügel 26 ist zwischen dem Korbboden 23 und den Befestigungselementen 25 angeordnet und mit den Befestigungselementen 25 und dem Korbboden 23 fest verbunden.

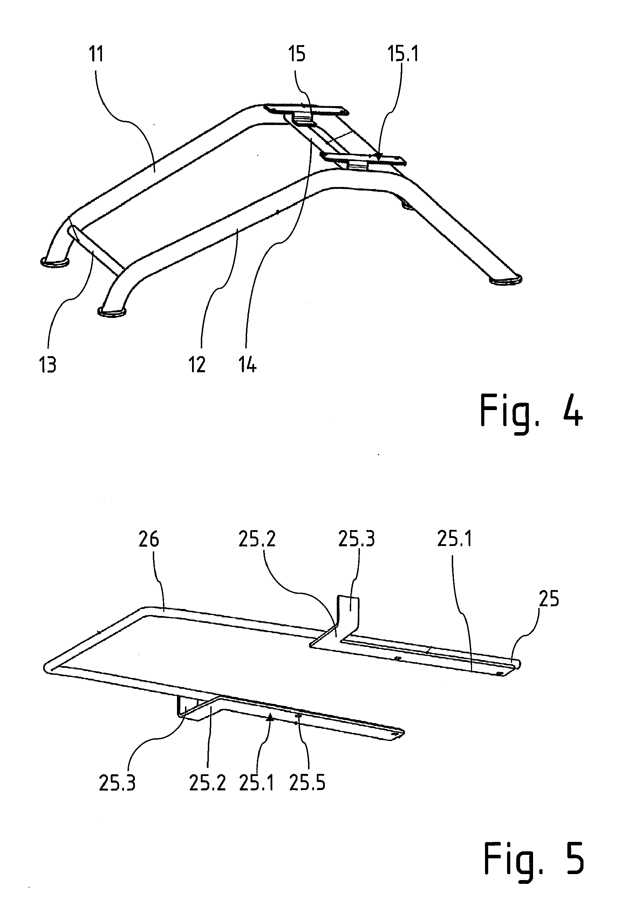

Figur 5 zeigt die Verstärkungsbaugruppe für den Drahtkorb 20. Diese umfasst einen U-förmigen Drahtbügel 26 aus besonders starkem Rundstahl und zwei damit verbundene, spiegelbildlich zueinander ausgerichtete Befestigungselemente 25.

Jedes Befestigungselement 25 besitzt eine Befestigungsfläche 25.1 mit Bohrungen zur Aufnahme einer Schraube oder eines Niets. An die Befestigungsfläche 25.1 schließt sich jeweils in einem Winkel von 90° ein Fortsatz 25.2 an, welcher in der gleichen horizontalen Ebene liegt wie die Befestigungsfläche 25.1. An den Fortsatz 25.2 wiederum schließt sich ein vertikal nach oben weisender Endabschnitt 25.3 an. Der Endabschnitt 25.3 ist im dargestellten Ausführungsbeispiel mit seiner Oberkante an den untersten der massiven Verstärkungsdrähte 21.1 der Korbseitenwand 21 angeschweißt. Das Befestigungselement 25 ist mit dem Verstärkungsbügel 26 fest verbunden.

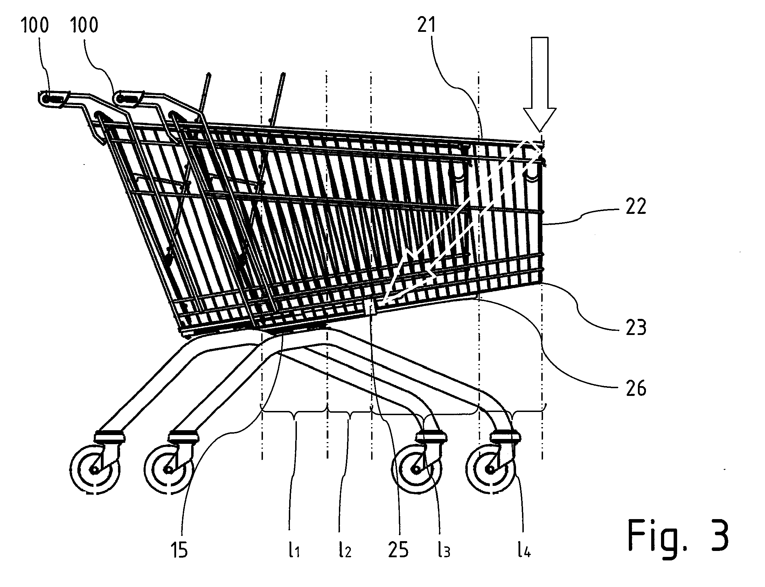

Der mögliche Kraftverlauf bei einer extremen Belastung wird unter Bezug auf Figur 3 dargestellt, in der zwei gestapelte Einkaufswagen 100 in einer seitlichen Ansicht dargestellt sind. Die maximale Belastung wird dadurch erreicht, dass eine Kraft auf die Kante der vorderen Korbwand 22 ausgeübt wird, beispielsweise wenn sich eine Person darauf setzt. Dabei greift die Kraft dort an, wo der Drahtkorb 20 maximal über das Fahrgestell 10 kragt.

Wie durch die Pfeile angedeutet, wird die dort ausgeübte Kraft bei dem Einkaufswagen gemäß der Erfindung über die sehr steif ausgebildeten vertikalen Seitenwände 21 in den Verstärkungsbügel 26 und in das Befestigungselement 25 eingeleitet.

Damit wird die Biegebeanspruchung auf vier Zonen, die in Figur 3 einzeln bezeichnet sind, verteilt:
- nur über eine Länge l₄ wird der Boden 23 ohne Verstärkung belastet;
- über eine Länge l₃ wird der Boden 23 bereits durch den Verstärkungsbügel 26 unterstützt;
- über eine Länge l₂ wird der Boden 23 durch den Verstärkungsbügel 26 und zusätzlich durch das Befestigungselement 25 gestützt,
- und schließlich wird über eine Länge l₁ das Biegemoment auf die fest mit dem Fahrgestell 10 verbundenen Verbindungselemente 15 geleitet.

Damit wird bei dem Einkaufswagen der Erfindung die Biegebeanspruchung des Bodens 23 - im Gegensatz zum Stand der Technik, wo am Übergang zwischen den Strecken l₁ und l₂ eine extreme Punktbelastung auftritt - wesentlich gemindert.

Figur 4 zeigt das Fahrgestell 10 ohne Rollen 16. Zwei Bügel 11, 12 sind über Quertraversen 13, 14 miteinander verbunden. Auf die obere Quertraverse 14 sind zwei Verbindungselemente 15 aufgesetzt. Die Verbindungsflächen 15.1 weisen nach oben und sind mit Bohrungen versehen, um eine feste Verbindung mit den Befestigungselementen 25 des Drahtkorbs 20 herstellen zu können.

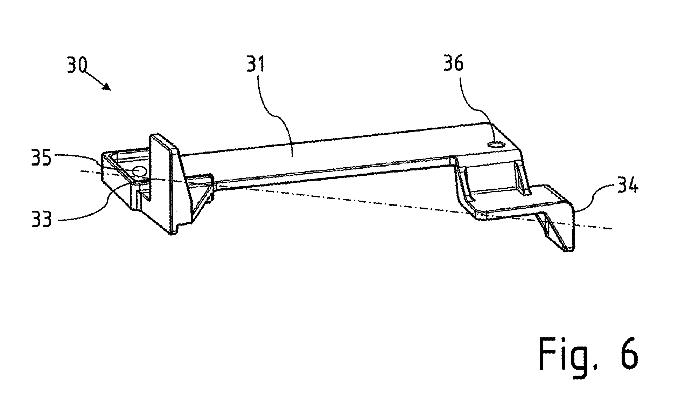

Figur 6 zeigt ein Dämpfungselement 30, das insbesondere aus einem thermoplastischen Kunststoff oder aus einem Elastomer besteht. Ein wesentlicher Teil seiner Länge wird durch eine zentrale Dämmplatte 31 gebildet, in der Bohrungen 35, 36 angeordnet sind. Das Lochbild stimmt mit denjenigen in dem Verbindungselement 15 des Fahrgestells 10 und in dem Befestigungselement 25 des Drahtkorbs 20 überein.

In der in Figur 6 dargestellten Lage ist das für die linke Seite vorgesehene Dämpfungselement 30 aus einer Blickrichtung von der Mitte des Einkaufswagens 100 her gezeigt. Somit weist eine Anschlagfläche 34, die sich an die Dämmplatte 31 anschließt, am fertigen Einkaufswagen 100 nach unten und eine Anschlagfläche 33, die an der anderen Seite angeordnet ist, weist nach oben.

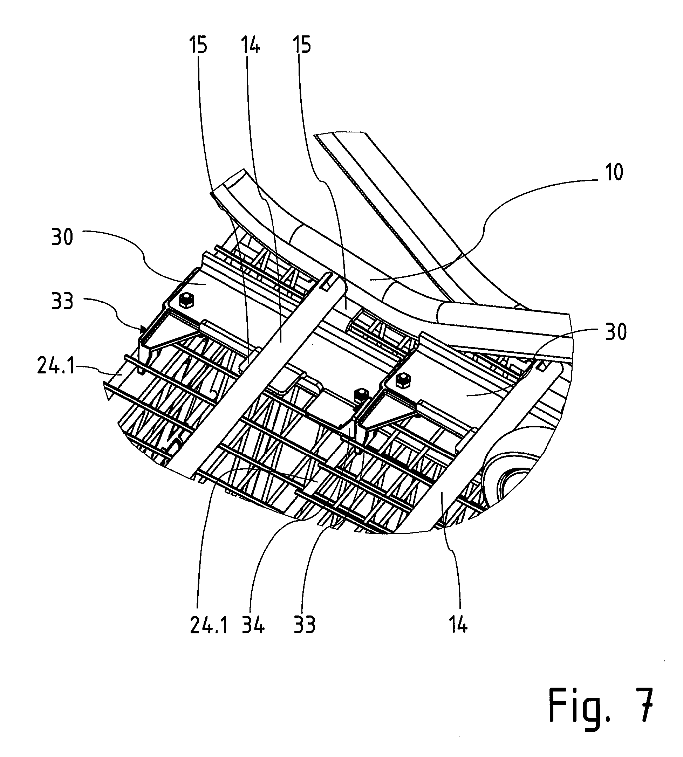

Da die Böden 23 der Einkaufswagen 100 in Fahrtrichtung leicht ansteigend ausgerichtet sind (vergleiche Figur 2) sind im Gebrauch auch die Dämmelemente 30 mehrerer hintereinander stehender Einkaufswagen 100 jeweils schräg ausgerichtet. Das heißt, dass beim Stapeln zweier Einkaufswagen 100, wie in Figur 3 und insbesondere Figur 7 dargestellt, die vordere Anschlagfläche 34 eines hinteren Einkaufswagens gegen die hintere Anschlagfläche 33 eines vorderen Einkaufswagens prallt und der Stoß vollständig in dem Dämpfungselement 30 abgefedert wird.

Fig. 7 zeigt im Detail den Bereich der Verbindungselemente von zwei ineinander geschobenen Einkaufswagen. Deutlich sichtbar sind die beiden Dämpfungselemente 30. Von dem in Fig. 7 linken Dämpfungselement 30 des einen Einkaufswagens liegt die Anschlagfläche 34 direkt vor der Anschlagfläche 33 des rechten Dämpfungselements 30 am benachbarten Einkaufswagen.

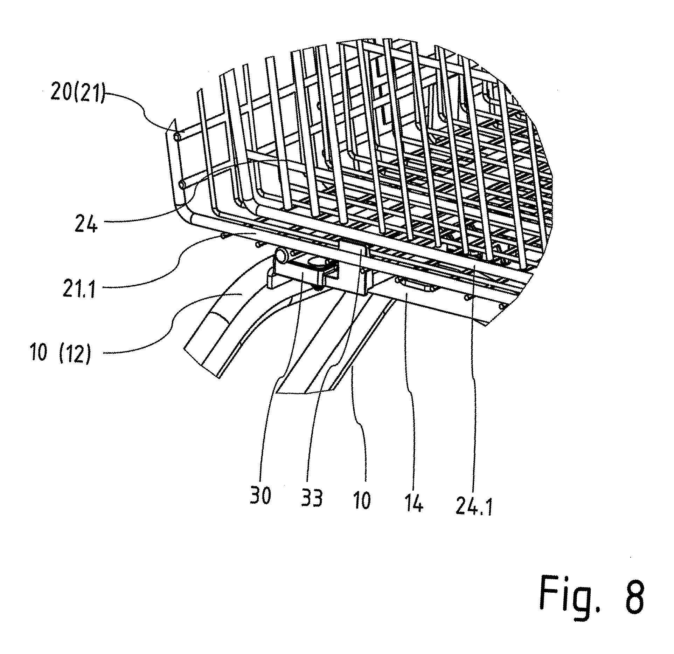

Fig. 8 zeigt einen Blick auf den Heckbereich des hintersten Einkaufswagens einer Reihe von Einkaufswagen. Die an dessen Drahtkorb 20 gelagerte Heckklappe 24 ist nach unten geschwenkt. Dabei liegt Sie mit einem unteren Abschlussdraht 24.1 an der hinteren Anschlagfläche 33 des Dämpfungselements 30 an, welche sich bis etwas oberhalb des Bodens des Drahtkorbs 20 erstreckt. Zugleich liegt der nach oben weisende Fortsatz, der die Anschlagfläche 33 bildet, vor einem hinteren Abschlussdraht 21.1 des festen Teils des Drahtkorbs 20. Ein direktes Aufeinanderprallen der metallischen Teile von Heckklappe 24 und Drahtkorb 20 ist also nicht mehr möglich. Die Geräuschentwicklung beim Herausziehen eines Einkaufswagens 100 aus einer Reihe von Einkaufswagen wird dadurch deutlich reduziert.

## Patentansprüche

1. Einkaufswagen (100), wenigstens umfassend ein Untergestell (10), welches zwei Paare von nach vorn und nach hinten abgespreizten Stützen umfasst, die endseitig mit Rollen (16) versehen ist, und welches wenigstens ein Verbindungselement (15) zur lösbaren Verbindung mit dem Korbboden (23) eines aufgesetzten Drahtkorbes (20) aufweist,
**dadurch gekennzeichnet,**
- **dass** am Fahrgestell (10) wenigstens ein Verbindungselement (15) vorgesehen ist, das mit einer Befestigungsfläche (15.1) nach oben weisend am Fahrgestell (10) angeordnet sind, und
- **dass** an einer Unterseite des Korbbodens (23) wenigstens ein Befestigungselement (25) angeordnet ist, das eine nach unten weisende Befestigungsfläche (25.1) aufweist und das seitlich in einen sich zu einer Korbseitenwand (21) des Drahtkorbes erstreckenden Fortsatz (25.2) über die Befestigungsfläche (25.1) hinausgeht, welcher Fortsatz (25.2) endseitig an die Korbseitenwand (21) angebunden ist.

2. Einkaufswagen (100) nach Anspruch 1, **dadurch gekennzeichnet, dass** am Fahrgestell (10) wenigstens zwei zueinander beabstandete Verbindungselemente (15) und/oder an der Unterseite des Korbbodens (23) zwei beabstandete Befestigungselemente (25) angeordnet sind.

3. Einkaufswagen (100) nach Anspruch 2, **dadurch gekennzeichnet, dass** das oder die Befestigungselement(e) (25) über einen vertikal nach oben weisenden Endabschnitt (25.3) an die Korbseitenwand (21) angebunden ist (sind).

4. Einkaufswagen (100) nach einem der Ansprüche 1 bis 3, **dadurch gekennzeichnet, dass** sich der Fortsatz (25.2) des Befestigungselements (25) in einem Winkel von 120° bis 150° in Bezug auf die Längsachse der Befestigungsfläche (25.1) nach außen erstreckt.

5. Einkaufswagen (100) nach wenigstens einem der Ansprüche 1 bis 4, **dadurch gekennzeichnet, dass** sich der Fortsatz (25.2) des Befestigungselements (25) in einem Winkel von 90° in Bezug auf die Längsachse der Befestigungsfläche (25.1) nach außen erstreckt.

6. Einkaufswagen (100) nach wenigstens einem der vorhergehenden Ansprüche 2 bis 6, **dadurch gekennzeichnet, dass** die Verbindungselemente (15) parallel angeordnet sind.

7. Einkaufswagen (100) nach wenigstens einem der vorhergehenden Ansprüche, **dadurch gekennzeichnet, dass** jeweils die vordere und die hintere Stütze an jeder Seite des Untergestells (10) Teil eines Bügelelements (11) sind und dass zwei Bügelelemente (11, 12) über wenigstens eine Quertraverse (13, 14) verbunden sind, wobei auf einer die oberen Scheitelpunkte der Bügel (11, 12) verbindenden Quertraverse (14) die Verbindungselemente (15) angeordnet sind.

8. Einkaufswagen (100) nach wenigstens einem der vorhergehenden Ansprüche, **dadurch gekennzeichnet, dass** zwischen den Verbindungselementen (15) des Untergestells (10) und den Befestigungselementen dem Drahtgitterkorb (20) jeweils wenigstens eine Dämmplatte (31) eingefügt ist.

9. Einkaufswagen (100) nach wenigstens einem der vorhergehenden Ansprüche, **dadurch gekennzeichnet, dass** zwischen den Verbindungselemente (15) und dem Drahtgitterkorb (20) jeweils ein Dämmelement (30) eingefügt ist, das eine Dämmplatte (31) umfasst, an welche sich in beiden Endbereichen jeweils ein abgewinkelt zur Dämmplatte (31) angestelltes Anschlagelement (33, 34) anschließt,

10. Einkaufswagen (100) nach Anspruch 9, **dadurch gekennzeichnet, dass** ein in Fahrtrichtung des Einkaufswagens (100) vorderes Anschlagelement (34) von einem schräg in Bezug auf die Fahrtebene angestellten Korbboden (23) nach unten weist und ein hinteres Anschlagelement (33) nach oben weist.

11. Einkaufswagen (100) nach wenigstens einem der vorhergehenden Ansprüche, **dadurch gekennzeichnet, dass** am Korbboden (23) ein Verstärkungsbügel (26) angebracht ist.

12. Einkaufswagen (100) nach Anspruch 11, **dadurch gekennzeichnet, dass** der Verstärkungsbügel (26) zwischen dem Korbboden (23) und den Befestigungselementen (25) angeordnet und mit diesen verbunden ist.

13. Einkaufswagen (100) nach wenigstens einem der vorhergehenden Ansprüche, **dadurch gekennzeichnet, dass** die Befestigungselemente (25) aus einem Blechzuschnitt gebildet sind

14. Einkaufswagen (100) nach wenigstens einem der vorhergehenden Ansprüche, **dadurch gekennzeichnet, dass** die Verbindungs- und Befestigungselemente (15, 25) jeweils wenigstens einen länglichen, schienenförmigen Abschnitt aufweisen.

15. Einkaufswagen (100) nach wenigstens einem der vorhergehenden Ansprüche, **dadurch gekennzeichnet, dass** die Verbindungs- und Befestigungselemente (15, 25) an ihren Befestigungsflächen (15.1, 25.1) miteinander verschraubt, verklebt und/oder vernietet sind.
